# EUROPEAN PATENT SPECIFICATION

(11) **EP 3 726 252 B1**
(45) Date of publication and mention of the grant of the patent: **03.05.2023**
(21) Application number: 19898335.5
(22) Date of filing: 11.11.2019
(51) Int. Cl.: G01C 21/30, G01C 21/16, G01S 19/49, G01S 19/34, G01S 19/47, G01S 19/14

(54) **GNSS DEVICE CONTROL METHOD AND SYSTEM**
GNSS-GERÄTESTEUERUNGSVERFAHREN UND SYSTEM
PROCÉDÉ ET SYSTÈME DE COMMANDE DE DISPOSITIF GNSS

(30) Priority: 19.12.2018 KR 20180165154
(43) Date of publication of application: 21.10.2020
(73) Proprietor: Ratio LLC., Goyang-si, Gyeonggi-do 10523 (KR)
(72) Inventor: JUNG, Won-Hyeong, Goyang-si Gyeonggi-do 10526 (KR)
(74) Representative: Manitz Finsterwald Patent- und Rechtsanwaltspartnerschaft mbB
(86) International application number: PCT/KR2019/015260
(87) International publication number: WO 2020/130352

(56) References cited:
- EP-A1- 2 362 184
- JP-A- 2011 185 899
- JP-A- 2012 127 722
- KR-A- 20110 009 695
- KR-A- 20150 121 816
- KR-B1- 101 485 694
- US-A1- 2011 071 759
- US-A1- 2011 071 759

## Description

### TECHNICAL FIELD

The present invention relates to method and system for controlling a GNSS device installed in a movement means, and more specifically, to GNSS device control method and system that can reduce power consumption by acquiring information through a GNSS device only at a necessary point in time.

### BACKGROUND

Recently, a market for bicycles has advanced, and thus, there is an increasing demand for bicycle computers which are attached to movement means such as vehicles and provide various convenient functions. The bike computers are electronic devices that collect and calculate various types of information on riding such as speed and display the information on screens.

Recently, the bike computers have mostly a navigation function for guiding a rider to a current position or a path to a destination, and an activity path tracking and recording function. In order to accurately implement the functions, it is necessary to accurately understand the current position information, and most of the position information is obtained through a global navigation satellite system (GNSS) such as a global positioning system (GPS).

However, a GNSS device has a problem that power consumption is very large. In particular, it is very important to reduce power consumption in mobile devices that have limited battery capacity unlike devices that are constantly powered, and there is no exception for the bike computers.

Document EP 2 362 184 A1 discloses a mobile navigation device operating in a first mode and a second mode, wherein, in the first mode, a satellite positioning module is activated while a dead reckoning module is disabled, whereas, in the second mode, the satellite positioning module is disabled while the dead reckoning module is activated.

Document JP 2012 127722 A discloses using map data as a criterion for switching from a positioning mode with higher accuracy and higher power consumption, to a positioning mode with lower accuracy and lower power consumption, and vice-versa, depending on route complexity.

Document US 2011/071759 A1 discloses using map data to determine when a GNSS receiver should enter an active mode.

Therefore, a technical idea is required to minimize power consumption and to accurately grasp current position information through a GNSS device.

### DISCLOSURE OF THE INVENTION

### PROBLEMS TO BE SOLVED BY THE INVENTION

The present invention is to provide a system and a method capable of minimizing power consumption of a GNSS device.

### MEANS FOR SOLVING THE PROBLEMS

According to an aspect of the present invention, a GNSS device control method for controlling a global navigation satellite system (GNSS) device installed in a movement means, includes by a GNSS device control system, acquiring map data; by the GNSS device control system, periodically performing a predetermined first process while the GNSS device is active; and by the GNSS device control system, periodically performing a predetermined second process while the GNSS device is deactivated, wherein the first process includes: acquiring position information and movement direction information of the movement means from the activated GNSS device; attempting to determine a road on which the movement means is traveling based on the map data and the position information and movement direction information of the movement means; and deactivating the activated GNSS device when a travel road on which the movement means is in travel is determined, and wherein the second process includes: acquiring measured data from an inertial measurement unit (IMU); acquiring speed data from a speed sensor; calculating a predicted position and a predicted movement direction of the movement means based on the measured data and the speed data; determining whether or not the movement means deviates from the travel road based on the map data and the predicted position and the predicted movement direction of the movement means; and activating the deactivated GNSS device when determined to deviate.

In one embodiment, the step of calculating of the predicted position and the predicted movement direction of the movement means based on the measured data and the speed data can include correcting the measured data by using an estimated value of a first error factor included in the inertial measurement device, correcting the speed data by using an estimated value of a second error factor included in the speed sensor, and calculating the predicted position and the predicted movement direction of the movement means based on the corrected measured data and the corrected speed data.

In one embodiment, the step of determining whether or not the movement means deviates from the travel road based on the map data and the predicted position and the predicted movement direction of the movement means can include temporarily determining whether or not the movement means deviates from the travel road based on the map data and the calculated estimated position and the calculated predicted movement direction of the movement means, attempting to correct the estimated value of the first error factor and the estimated value of the second error factor when determined temporarily that the movement means deviates from the travel road, determining that the movement means does not deviate from the travel road when correction of the estimated value of the first error factor and the estimated value of the second error factor is successful, and determining that the movement means deviates from the travel road when correction of the estimated value of the first error factor and the estimated value of the second error factor fails.

In one embodiment, the step of attempting to correct the estimated value of the first error factor and the estimated value of the second error factor can include finding a corrected estimated value of the first error factor and a corrected estimated value of the second error factor that satisfy a predetermined high-level condition, wherein the high-level condition is that each past data acquired by the inertial measurement device and the speed sensor satisfies a predetermined low-level condition after the GNSS device is deactivated most recently, wherein the low-level condition is that when a past predicted position and a past predicted movement direction of the movement means are recalculated based on the past data corrected by using the corrected estimated value of the first error factor and the corrected estimated value of the second error factor, it is determined, by the recalculated past predicted position and the recalculated past predicted movement direction of the movement means, that the movement means does not deviate from the travel road.

In one embodiment, the step of determining whether or not the movement means deviates from the travel road based on the map data and the predicted position and predicted movement direction of the movement means can further include recalculating a past predicted position and a past predicted movement direction of the movement means based on the past data corrected by using the corrected estimated value of the first error factor and the corrected estimated value of the second error factor, for each of all the past data acquired by the inertial measurement device and the speed sensor after the GNSS device is deactivated most recently when the correction of the estimated value of the first error factor and the estimated value of the second error factor is successful.

In one embodiment, the step of temporarily determining whether or not the movement means deviates from the travel road based on the map data and the predicted position and predicted movement direction of the movement means can include determining temporarily whether or not the movement means deviates from the travel road by using a predetermined function defined by a distance between the predicted position of the movement means and the travel road and by an angle between the predicted movement direction of the movement means and the movement direction of the travel roads.

In one embodiment, the first process can further include correcting the estimated value of the first error factor and the estimated value of the second error factor so as to minimize a difference between a final estimated position of the moving means finally calculated in the second process performed most recently and a position of the movement means first acquired from the GNSS device after the GNSS device is activated most recently, when the GNSS device is switched from an inactive state to an active state.

According to another aspect of the present invention, a computer program that is installed in a data processing device and stored in a recording medium, includes the method described above.

According to another aspect of the present invention, a GNSS device control system includes a processor, and a memory that stores a computer program executed by the processor, wherein the computer program causes the GNSS device control system to perform the method described above when executed by the processor.

### EFFECTS OF THE INVENTION

According to an embodiment of the present invention, it is possible to provide a system and a method of minimizing power consumption of a GNSS device.

According to an embodiment of the present invention, in a situation in which a travel road on which a movement means is in travel can be conclusively determined, a GNSS device is deactivated and it is determined to deviate the travel road, and in a situation in which information collected from the GNSS device is absolutely necessary, the GNSS device is activated, and thus, there is an advantage in that power consumed by the GNSS device can be minimized.

In addition, according to an embodiment of the present invention, it is possible to provide a method of efficiently estimating an error factor included in the an IMU or a speed sensor. Accordingly, there is an effect of preventing inaccurate prediction of a position, a speed, and a movement direction of a movement means that can occur due to accumulation of errors due to error factors.

### BRIEF DESCRIPTION OF THE DRAWINGS

In order to better understand the drawings cited in the detailed description of the present invention, brief description of each drawing is provided.
FIG. 1 is a block diagram illustrating a drive environment of a GNSS device control system according to an embodiment of the present invention.
FIG. 2 is a diagram illustrating concept of a GNSS device control method performed by the GNSS device control system according to an embodiment of the present invention.
FIG. 3 is a flowchart illustrating in more detail a the GNSS device control method according to the embodiment of the present invention.
FIG. 4 is a diagram illustrating a road determination function used in the GNSS device control method according to the embodiment of the present invention.
FIG. 5 illustrates an example of detailed steps of step 210 of FIG. 3.
FIG. 6 illustrates an example of a detailed step of step S220 of FIG. 3.
FIGS. 7 and 8 are diagrams illustrating a method of correcting an error factor estimation value performed in the GNSS device control method according to the embodiment of the present invention.

### BEST MODE FOR CARRYING OUT THE INVENTION

The present invention can be variously changed and have various embodiments, and thus, specific embodiments will be illustrated in the drawings and described in detail in the specification. However, this is not intended to limit the present invention to specific embodiments, and it should be understood that the present invention includes all changes, equivalents, and substitutes within the scope of the invention as defined by the appended claims. In describing the present invention, when it is determined that detailed descriptions on related well-known technologies can obscure the subject matter of the present invention, detailed descriptions thereof will be omitted.

Hereinafter, the present invention will be described in detail with reference to the accompanying drawings by mainly using embodiments of the present invention. The same symbols or reference numerals in each drawing denote the same members.

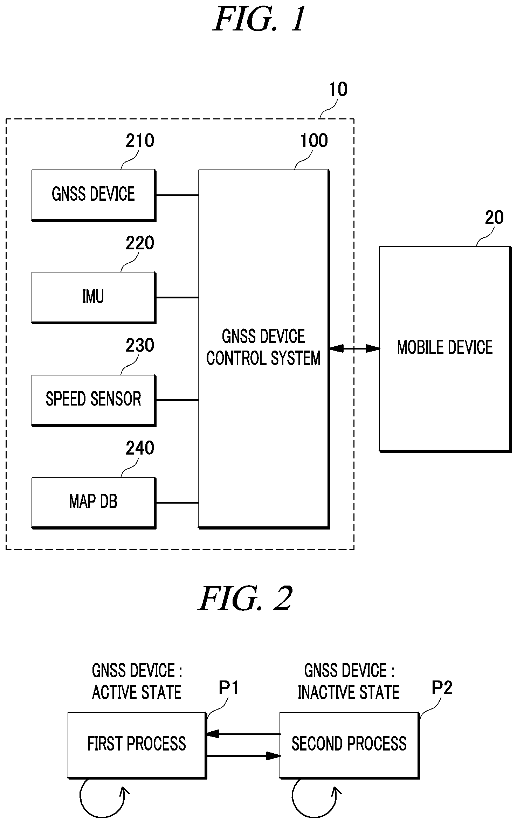

A GNSS device control method according to an embodiment of the present invention can be performed by a GNSS device control system. FIG. 1 is a block diagram illustrating a drive environment of a GNSS device control system 100 according to an embodiment of the present invention.

The GNSS device control system 100 may be an information processing device or a combination of the information processing device and software installed in the information processing device.

In one embodiment, the GNSS device control system 100 may be an independent device or a subsystem mounted in another system. For example, the GNSS device control system 100 may be a bike computer or a subsystem mounted on the bike computer. Alternatively, the GNSS device control system 100 may be a subsystem mounted in a mobile device, such as a smartphone or a tablet PC.

In another embodiment, the GNSS device control system 100 can communicate with a mobile device, such as a smartphone or a tablet PC, to perform the technical idea of the present invention. For example, the GNSS device control system 100 can receive map data from the mobile device.

The GNSS device control system 100 can control a GNSS device 210 as illustrated in FIG. 1. More specifically, the GNSS device control system 100 can activate or deactivate the GNSS device 210 and acquire position information, speed information, and/or direction information from the activated GNSS device 210.

The GNSS device 210 can receive a signal from a GNSS satellite. GNSS means a system that enables positioning by using a satellite and can include, for example, a global positioning system (GPS) of the United States, a global navigation satellite system (GLONASS) of Russia, Galileo of Europe, BeiDu-2 of China,. QZSS of Japan, and so on.

The GNSS device 210 can calculate a position, a speed, and/or a movement direction of the GNSS device 210 or a device mounted with the GNSS device 210 through a signal received from a GNSS satellite.

The fact that the GNSS device 210 is activated can indicate a state in which the GNSS device 210 is capable of receiving a signal from the GNSS satellite and calculating a position thereof, and the fact that the GNSS device 210 is deactivated can indicate a state in which the GNSS device 210 cannot receive a signal from the GNSS satellite or the GNSS device 210 cannot output a speed, a position, and/or direction information to the outside. When the GNSS device 210 is deactivated, power can be disconnected, and thus, power cannot be consumed. Alternatively, when being deactivated, the GNSS device 210 can enter a standby state, thus, consuming only a minimum amount of power. In order to include this case, "deactivation" can include concept of "less activation" in the present specification.

As illustrated in FIG. 1, the GNSS device control system 100 can receive Information, signals, and/or data, which can be controlled as necessary, required to implement technical idea of the present invention from an inertial measurement unit (IMU) 220, a speed sensor 230, and/or a map DB 240.

The IMU 220 can measure an inertia force or measure information on inclination of a body and can include an acceleration sensor for measuring gravity and a gyro sensor for measuring angular acceleration. In some cases, the IMU 220 can also further include a geomagnetic sensor.

The speed sensor 230 can measure a speed of the speed sensor 230 or a device mounted with the speed sensor 230. Alternatively, the speed sensor 230 can measure data for calculating a speed. For example, the speed sensor 230 may be a sensor (for example, a tachometer) that measures the number of revolutions of a wheel of a movement means. Alternatively, the speed sensor 230 can measure a movement distance. In this case, the speed can be obtained by dividing the movement distance during a measurement time by the measurement time.

The map DB 240 may be means (for example, a memory device) for storing map data. The GNSS device control system 100 can acquire at least a part of map data stored in the map DB 240 to be used to perform a GNSS device control method according to the technical idea of the present invention.

The map data can include road information on the map. For example, the map data can include information on a length or a width of a road on a map, information on a name or identification of a road, information on a connection relationship between roads, and/or other information that can define a position and a shape of a road. The road can vary depending on a movement means in which the GNSS device 210 is installed. When the movement means is a vehicle, the road may be a road through which the vehicle can pass. If the movement means is a bicycle, the road can also further include a bicycle road.

As illustrated in FIG. 1, the GNSS device control system 100 can be implemented in the form of a subsystem included in a predetermined mother system 10. The mother system 10 may be a bike computer but is not limited thereto and may be a computing system including a processor and a memory. In one embodiment, the mother system 10 can include the GNSS device 210, the IMU 220, the speed sensor 230 and/or the map DB 240.

Meanwhile, according to embodiments, the GNSS device control system 100 may be an independent system unlike FIG. 1.

In addition, although FIG. 1 illustrates an embodiment in which the GNSS device 210, the IMU 220, the speed sensor 230, and the map DB 240 are included in the mother system 10, the GNSS device ( 210), the IMU 220, the speed sensor 230, at least a portion of the map DB 240 can be included in the GNSS device control system 100. Also, there may be an embodiment in which at least some of the GNSS device 210, the IMU 220, the speed sensor 230, and the map DB 240 are located outside the mother system 10.

Alternatively, at least some of the GNSS device 210, the IMU 220, the speed sensor 230, and the map DB 240 can be included in a predetermined external device (for example, the mobile device 20 such as a smartphone or a tablet PC) and the other can be included in the GNSS device control system 100. At this time, the external device may be a device installed in the movement means or the mobile device 20 carried by a passenger (for example, a rider) of the movement means.

Meanwhile, according to embodiments, the GNSS device control system 100 or the mother system 10 can perform wireless communication with the mobile device 20 and can transmit and receive various types of information, data and/or signals necessary to implement the technical idea of the present invention. For example, the GNSS device control system 100 or the mother system 10 can receive map data from the mobile device 20.

The GNSS device control system 100 or the mother system (for example, a bike computer) 10 can be installed in a movement means. The movement means may be a bicycle, a motorcycle, an electric wheel, a Segway, a vehicle, a kickboard, or the like. However, this is only an example, and any movable means capable of measuring a speed and a movement distance may be a movement means to which the technical idea of the present invention can be applied. For example, the movement means may be shoes.

FIG. 2 is a diagram illustrating concept of a GNSS device control method performed by the GNSS device control system 100 according to an embodiment of the present invention.

Referring to FIG. 2, the GNSS device control system 100 can repeatedly or periodically perform a predetermined first process P1 while the GNSS device 210 is in an active state, and when a predetermined deactivation condition is satisfied while the first process P1 is performed, the GNSS device 210 can be switched from an active state to a inactive state. Meanwhile, while the GNSS device 220 is in a inactive state, the GNSS device control system 100 can repeatedly or periodically perform a second process P2 different from the first process P1, and the GNSS device 210 can be switched from the inactive state to the active state again when a predetermined activation condition is satisfied while the second process P2 is performed. That is, while the GNSS device control method according to the embodiment of the present invention is performed, the GNSS device 210 can be switched between the active state and the inactive state and have a structure in which a process corresponding to each state is performed. Meanwhile, a term "process" in the present specification can indicate a series of steps performed by the GNSS device control system 100 or a part of a method performed by the GNSS device control system 100.

Meanwhile, the GNSS device control system 100 can acquire map data before or while the first process P1 and the second process P2 are performed for the first time, and the acquired map data can be used to perform the first process P1 and the second process P2.

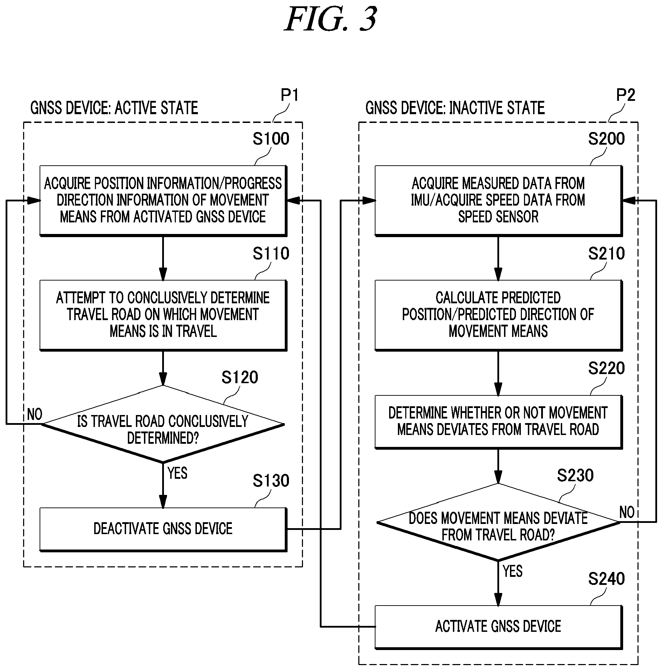

FIG. 3 is a diagram illustrating in detail the first process P1 and the second process P2 of the GNSS device control method according to the embodiment of the present invention.

Referring to FIG. 3, when the GNSS device 210 is in an active state, the GNSS device control system 100 can perform the first process P1.

In the first process P1, the GNSS device control system 100 can acquire position information and movement direction information of a movement means from the activated GNSS device 210 (S100).

Thereafter, the GNSS device control system 100 can attempt to conclusively determine a road on which the movement means travels, based on the map data and the position information and movement direction information of the movement means. That is, the GNSS device control system 100 can determine whether or not the road on which the movement means travels can be conclusively determined.

To this end, the GNSS device control system 100 can compare a position of the movement means with a position of each road on the map data, and compare a movement direction of the movement means and a movement direction on each road on the map data.

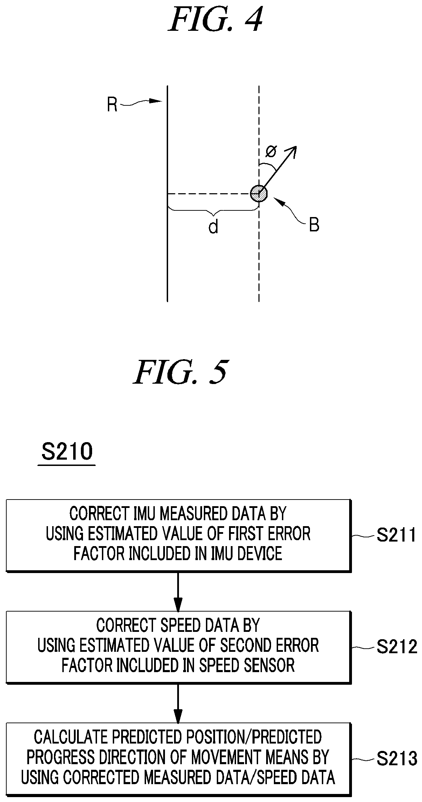

In one embodiment, the GNSS device control system 100 can receive the map data or road information on the map data, and the position information and the movement direction information of the movement means so as to use as a predetermined function (hereinafter, referred to as a "road determination function F") for determining whether or not the movement means is located on a specific road. FIG. 4 is referenced to describe an example of the road determination function F. As illustrated in FIG. 4, when a shortest distance between a road R and a movement means B is referred to as d and a difference between a movement direction of the road R and a movement direction of the movement means B is referred to as φ, the road determination function F according to the embodiment of the present invention may be a function defined by using d and φ.

The GNSS device control system 100 can determine conclusively or temporarily a road on which a movement means is located by calculating an F value for each road on a map data or each road within a certain range around the movement means. For example, when a road with the F value less than or equal to a predetermined threshold is found, the GNSS device control system 100 can determine that a road having the smallest F value as a road on which a movement means is in travel. Alternatively, the GNSS device control system 100 temporarily determines that the road having the smallest F value is the road on which the movement means is in travel, and when it is temporarily determined that the movement means is continuously located on the road a predetermined number of times or for a certain period, the corresponding road is displayed. the GNSS device control system 100 can conclusively determine that the road is a road on which the movement means is in travel.

Meanwhile, in determining a travel road, a speed of the movement means can also be further considered. For example, the travel road can be conclusively determined only when the speed of the movement means is greater than or equal to a predetermined numeral value.

The above description is only made for easy understanding of concept of a method of conclusively determining a road on which a movement means is in travel, and a method for the GNSS device control system 100 to conclusively determine a road on which the movement mans is in travel can be various.

Referring back to FIG. 3, when the road (hereinafter referred to as a "travel road") on which the movement means is in travel is conclusively determined, the GNSS device control system 100 can deactivate the activated GNSS device 210 to cause the second process P2 to be performed (S120 and S130).

When the travel road on which the movement means is in travel is not conclusively determined, the GNSS device control system 100 can repeat the first process P1 (see S120 and S100). The first process P1 can be repeatedly performed every predetermined cycle (for example, a GPS measurement cycle).

Meanwhile, when the GNSS device 210 is in an active state, the GNSS device control system 100 can perform the second process P2.

In the second process P1, the GNSS device control system 100 can acquire measured data from the IMU 220 acquire speed data from the speed sensor 230 (S200).

Thereafter, the GNSS device control system 100 can calculate a predicted position and a predicted movement direction of the movement means based on the measured data and the speed data (S210). For example, the GNSS device control system 100 can calculate the predicted position and the predicted movement direction of the movement means by reflecting the measured data and the speed data in the position information and the movement direction information received most recently from GNSS device 210 (S210).

Meanwhile, the GNSS device control system 100 can determine whether or not the movement means deviates from the travel road based on the map data, and the predicted position and the predicted movement direction of the movement means (S220). In one embodiment, the GNSS device control system 100 can determine whether or not the movement means deviates from the travel road by using the above-described road determination function F. The GNSS device control system 100 can calculate an F value based on the shortest distance between the travel road and the predicted position of the movement means, and a difference between the travel road and the predicted movement direction of the movement means, and can determine that the movement means deviates from the road temporarily or conclusively when the F value is greater than or equal to a predetermined threshold.

Alternatively, the GNSS device control system 100 can determine whether or not the movement means deviates from the travel road by using a deviation determination function F' similar to the road determination function F. When the deviation determination function F' is used, the deviation determination function F' may be a function defined by using the shortest distance between the travel road and the predicted position of the movement means, and the difference between the movement direction of the travel road and the predicted movement direction of the movement means in the same manner as the road determination function F. According to embodiments, the number of deviations or the number of consecutive deviations can be further required to define this function. For example, even when the shortest distance between the travel road and the predicted position of the movement means and the difference between the movement direction of the travel road and the predicted movement direction of the movement means exceeds a predetermined numeral value, it is not determined immediately to deviate, but when the shortest distance and the difference exceed the predetermined numeral value by a predetermined number of times (or a predetermined consecutive number of times), it can be determined to deviate.

If it is determined that the movement means deviates from the travel road, the GNSS device control system 100 can activate the deactivated GNSS device 210 and enable the first process P1 to be performed (S230 and S240).

If it is determined that the movement means does not deviate from the travel road, the GNSS device control system 100 can repeatedly perform the second process P2 (see S230 and S200). The second process P2 can be repeatedly performed every predetermined cycle.

Meanwhile, the IMU 220 and/or the speed sensor 230 can include a factor that causes an error. For example, if some (for example, a gyro sensor) of the sensors included in the IMU 220 are biased to one side, an error occurs in the measured value due to this. Accordingly, the GNSS device control system 100 according to the embodiment of the present invention can estimate a value of the error factor included in the IMU 220 and/or the speed sensor 230, can correct the measured data and/or the speed data by using the estimated value of the error factor, and can use the corrected value. In this embodiment, step 210 of FIG. 3 can be configured with detailed steps illustrated in FIG. 5.

Referring to FIG. 5, in step 210, the GNSS device control system 100 can correct the measured data output by the IMU 220 by reflecting an estimated value of an error factor (hereinafter, referred to as a "first error factor") included in the IMU 220 (S211), and can correct the speed data output by the speed sensor 230 by using an estimated value of an error factor (hereinafter, referred to as a "second error factor") inherent in the speed sensor 230 (S212).

Thereafter, the GNSS device control system 100 can calculate a predicted position and a predicted movement direction of the movement means based on the corrected measured data and the corrected speed data (S213).

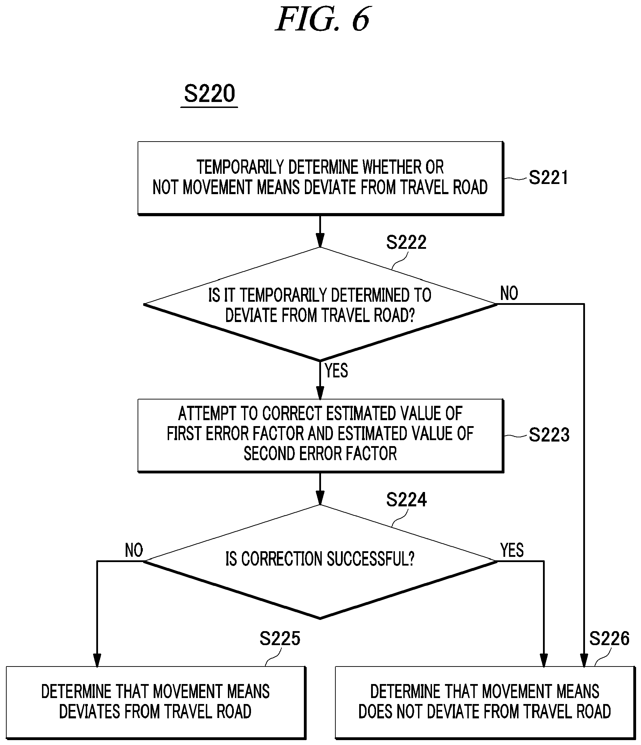

Meanwhile, in one embodiment, even if it is determined that the movement means deviates from the travel road based on the map data and the calculated predicted position and the calculated predicted movement direction of the movement means, the GNSS device 210 does not immediately deactivates the GNSS device 210 and can attempt to correct the first error factor and/or the second error factor, and if the correction fails, it can be conclusively determined that the movement means deviates from the travel road, and in this embodiment, step S220 of FIG. 3 can be configured with detailed steps as illustrated in FIG. 6.

Referring to FIG. 6, the GNSS device control system 100 can temporarily determine whether or not the movement means deviates from the travel road based on the map data and the calculated predicted position and the calculated predicted movement direction of the movement means (S21).

If it is temporarily determined that the movement means does not deviate from the travel road, the GNSS device control system 100 can conclusively determine that the movement means deviates from the travel road (S222 and S226).

Meanwhile, when it is temporarily determined that the movement means deviates from the travel road, the GNSS device control system 100 does not determine immediately and conclusively that the movement means deviates from the travel road, and can attempt to correct an estimated value of the first error factor and an estimated value of the second error factor (S222 and S223). A method of correcting the estimated value of the first error factor and the estimated value of the second error factor will be described below.

If the correction of the estimated value of the first error factor and the estimated value of the second error factor is successful, the GNSS device control system 100 can determine (conclusively determine) that the movement means does not deviate from the travel road (S224 and S226).

If the correction of the estimated value of the first error factor and the estimated value of the second error factor fails, the GNSS device control system 100 can determine (conclusively determine) that the movement means deviates from the travel road ( S224 and S225).

Meanwhile, a method of correcting the estimated value of the first error factor and the estimated value of the second error factor may be as follows.

The corrected estimated value (that is, a correction value of the estimated value of the first error factor) of the first error factor that satisfies the following condition 1, which is a high-level condition, and the corrected estimated value (that is, the corrected value of the estimated value of the second error factor) are found.

At this time, condition 1 can satisfy the following condition 2, in which each past data acquired by the IMU 220 and the speed sensor 230 after the GNSS device 210 has been deactivated most recently satisfies a low-level condition.

Here, condition 2 is that when the past predicted position and the past predicted movement direction of the movement means are recalculated based on the past data corrected by using the corrected estimated value of the first error factor and the corrected estimated value of the second error factor, it is determined, by the recalculated past predicted position and past predicted movement direction of the movement means, that the movement means does not deviate from the travel road.

Meanwhile, when the correction of the estimated value of the first error factor and the estimated value of the second error factor is successful, the GNSS device control system 100 can recalculate the past predicted position and past predicted movement direction of the movement means, based on the past data corrected by using the corrected estimated value of the first error factor and the corrected estimated value of the second error factor, for each of all the past data acquired by the inertial measurement device and the speed sensor after the GNSS device has been deactivated most recently.

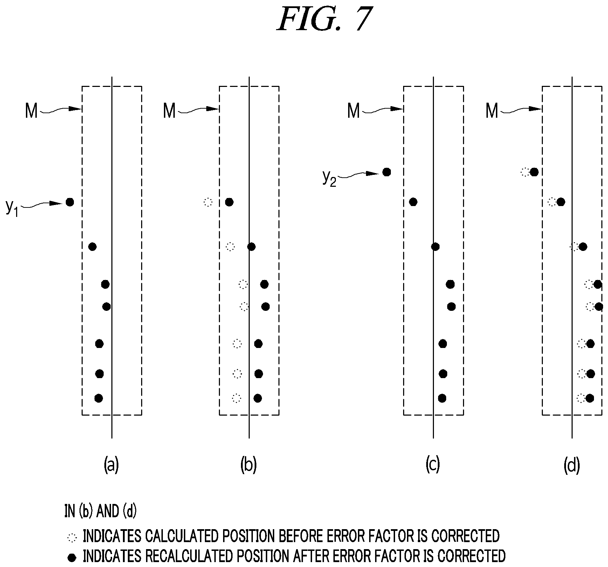

Hereinafter, a method of correcting the estimated value of the first error factor and/or the estimated value of the second error factor will be described in more detail with reference to FIG. 7. In FIG. 7, it is assumed to be temporarily determined that the movement means deviates from the travel road when a predicted position of the movement means during a deactivation period of the GNSS device 210 deviates from a certain region M of the travel road, for the sake of convenience of understanding. That is, in FIG. 7, only the position of the movement means is considered without considering the movement direction of the movement means in determining whether or not to deviate, for the sake of convenience of understanding. In addition, the estimated value of the first error factor and/or estimated value of the second error factor will be referred to as an "estimated value of an error factor".

FIG. 7(a) and FIG. 7(c) illustrate the predicted position of the movement means, and FIG. 7(b) and FIG. 7(d) mean the predicted position of the movement illustrate the predicted position of the movement means recalculated by the corrected value after the correction of the estimated value of the error factor, and in FIG. 7(a) and FIG. 7(c) illustrate the predicted position of the movement means calculated before the correction of the estimated value of the error factor.

If during a deactivation period a trajectory of the movement means is predicted as illustrated in FIG. 7(a), and finally, if the predicted position of the movement means is referred to as y1, the predicted position y1 deviates from the region M, it will be temporarily determined that the movement means deviates from the travel road. However, if all the predicted positions illustrated in FIG. 7(a) can be recalculated, as illustrated in FIG. 7(b), by a specific correction value of the estimated value of the error factor, the estimated value of the error factor is corrected with a corresponding correction value, all the predicted positions illustrated in FIG. 7(a) are denoted by • in FIG. 7(b), and it will be determined that the movement means still does not deviate the travel road.

Thereafter, if a next predicted position of the movement means is calculated as y2 as illustrated in FIG. 7(c), it will be temporarily determined that the movement means deviates from the travel road because the predicted position y2 deviates from the region M. However, as illustrated in FIG. 7(d), if all the predicted positions illustrated in FIG. 7(c) cannot be located inside the region M by any correction value of the estimated value of the error factor (that is, there is no suitable estimated value of the error factor), it is set that correction of the estimated value of the error factor fails, and it will be determined that the movement means deviates from the travel road.

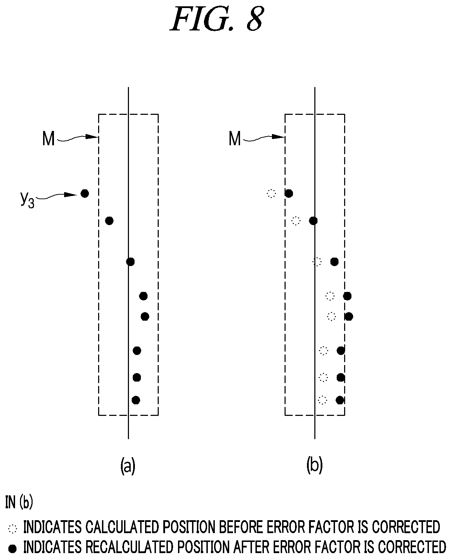

Even when a predicted position of a middle point on the past path of the movement means is not inside the region M even by the optimal correction value of the estimated value of the error factor, it is determined that correction of the estimated value of the error factor fails and it can be determined that the movement means deviates from the travel road, which are illustrated in FIG. 8.

FIG. 8(a) illustrates the predicted position of the movement means, FIG. 8(b) illustrates the predicted position of the movement means recalculated by the corrected value after the correction of the estimated value of the error factor, and ∘ indicates the predicted position of the movement means calculated before the estimated value of the error factor is corrected. If the predicted position of the movement means is calculated as y3 as illustrated in FIG. 8(a), it will be temporarily determined that the movement means deviates from the travel road because the predicted position y3 deviates the region M. However, as illustrated in FIG. 8(b), if all the predicted positions illustrated in FIG. 8(b) cannot be located in the region M even by any correction value of the estimated value of the error factor (for example, if there is no suitable estimated value of the error factor), it is set that correction of the estimated value of the error factor fails, and it will be determined that the movement means deviates from the travel road.

Meanwhile, if the estimated value of the error factor can be corrected with multiple values, the GNSS device control system 100 can select the most optimal value of the possible correction values. At this time, the GNSS device control system 100 can select an optimal correction value through a method such as convex optimization. Alternatively, according to embodiments, an optimal correction value can be selected through regression analysis.

Meanwhile, according to embodiments, the estimated value of the error factor can also be corrected by a value acquired from the GNSS device 210 in the first process P1. That is, when an inactive state is switched to an active state, the GNSS device control system 100 can correct the estimated value of the first error factor and the estimated value of the second error factor so as to minimize a difference between the final estimated position of the movement means finally calculated in the second process P2 performed most recently and the position of the movement means first acquired from the GNSS device after the GNSS device is activated most recently.

Meanwhile, according to embodiments, the GNSS device control method can also employ only one of the estimated value of the first error factor and the estimated value of the second error factor, and detailed description thereof will be omitted because those skilled in the art will readily understand the embodiments from the description made above.

Meanwhile, according to embodiments, other activation conditions of the GNSS device 210 can also be further reflected in addition to the case in which it is determined to deviate the travel road.

For example, if it is determined that too long period of time (for example, a previously defined maximum deactivation period) elapses after the GNSS device 210 is deactivated, the GNSS device control system 100 can activate the GNSS device 210.

Alternatively, the GNSS device control system 100 can determine whether or not the movement means enters a predetermined region of interest based on the predicted position of the movement means, and can activate the GNSS device 210 when it is determined that the movement means enters the predetermined region of interest. At this time, the region of interest can be a previously designated region and may be an important region required to know an exact position by the GNSS device 210. For example, the previously designated region of interest may be a region that occupies an important role in path guidance, such as near an intersection, near a roundabout, near a crosswalk, near an interchange, near region of an object having predetermined geographic/topographic characteristics. In one embodiment, the region of interest can be designated as a region within a predetermined distance from a previously designated point of interest.

In addition to this, various activation conditions can be further reflected.

As described above, according to the technical idea of the present invention, in a situation in which the travel road on which the movement means is in travel can be conclusively determined, the GNSS device 210 is deactivated and it is determined to deviate, and in a situation in which information collected from the GNSS device 210 is absolutely necessary, the GNSS device 210 is activated, and thus, there is an advantage in that power consumed by the GNSS device 210 can be minimized. In addition, there is an effect of reducing an expected error while minimizing power consumption.

In addition, it is possible to provide a method of efficiently estimating an error factor included in the an IMU or a speed sensor. Accordingly, there is an effect of preventing inaccurate prediction of a position, a speed, and a movement direction of a movement means that can occur due to accumulation of errors due to error factors.

The GNSS device control system 100 can include hardware resources and/or software necessary to implement the technical idea of the present invention and does not mean one physical configuration element or one device. That is, the GNSS device control system 100 can mean a logical combination of hardware and/or software provided to implement the technical idea of the present invention, and can be implemented by a set of logical configurations for implementing the technical idea of the present invention by being installed in devices spaced apart from each other to perform each function if necessary. In addition, the GNSS device control system 100 can also mean a set of configurations that are separately implemented for each function or role for implementing the technical idea of the present invention.

In addition, in the specification, a module can mean a functional and structural combination of hardware for performing the technical idea of the present invention and software for driving the hardware. For example, the module can mean a logical unit of a predetermined code and a hardware resource for performing the predetermined code, and it can be easily deduced from an average expert in the technical field of the present invention that the module does not necessarily mean physically connected codes or a type of hardware.

Meanwhile, according to implementation examples, the GNSS device control system 100 can include a processor and a memory for storing a program executed by the processor. The processor can include a single-core CPU or a multicore CPU. The memory can include a high-speed random access memory and can also include non-volatile memories such as one or more magnetic disk storage devices, flash memory devices, or other non-volatile solid-state memory devices. Access to a memory made by a processor and other configuration elements can be controlled by a memory controller. Here, when a program is executed by a processor, the GNSS device control system 100 according to the present embodiment can perform the GNSS device control method described above.

Meanwhile, the GNSS device control method according to an embodiment of the present invention can be implemented in the form of a computer-readable program command and stored in a computer-readable recording medium, and a control program and a target program according to an embodiment of the present invention can also be stored in a computer-readable recording medium. The computer-readable recording medium includes all kinds of recording devices in which data readable by a computer system are stored.

Program commands recorded in the recording medium can be specially designed and configured for the present invention or can be known and used by those skilled in the software art.

Examples of computer-readable recording media include magnetic media such as a hard disk, a floppy disk, and a magnetic tape, optical media such as a CD-ROM and a DVD, magneto-optical media such as floptical disks, and a hardware device specifically configured to store and perform program commands, such as a ROM, a RAM, and a flash memory. In addition, the computer-readable recording media can be distributed in computer systems connected to each other via a network such that computer-readable codes can be stored and executed in a distributed manner.

Examples of the program commands include not only machine language codes made by a compiler but also high-level language codes that can be executed by a device for processing information electronically by using an interpreter or the like, for example, a computer.

The hardware device described above can be configured to operate as one or more software modules to perform the operation of the present invention, and vice versa.

The above description of the present invention is for illustration only, and those skilled in the technical field to which the present invention belongs can understand that the description can be easily modified to other specific forms without changing the technical idea or essential features of the present invention. Therefore, it should be understood that the embodiments described above are illustrative in all respects and not restrictive. For example, each configuration element described in a single type can be implemented in a distributed manner, and similarly, configuration elements described in a distributed manner can be implemented in a combined form.

The scope of the present invention is indicated by the appended claims rather than the specification described above, and it should be construed that changes or modifications can be made to the specification described above, within the scope of the invention as defined by the appended claims.

### Industrial Applicability

The present invention can be used in a GNSS device control method and system.

## Claims

1. A GNSS device control method for controlling a global navigation satellite system (GNSS) device (210) installed in a movement means, the method comprising
by a GNSS device control system (100), acquiring map data;
by the GNSS device control system, periodically performing a predetermined first process (P1) while the GNSS device is active; and
by the GNSS device control system, periodically performing a predetermined second process (P2) while the GNSS device is deactivated,
wherein the first process includes:
acquiring (S100) position information and movement direction information of the movement means from the activated GNSS device;
attempting (S110, S120) to determine a road on which the movement means is traveling based on the map data and the position information and movement direction information of the movement means; and
deactivating (S130) the activated GNSS device when a travel road on which the movement means is in travel is determined, and
wherein the second process includes:
acquiring (S200) measured data from an inertial measurement unit (IMU) (220);
acquiring (S200) speed data from a speed sensor (230);
calculating (S210) a predicted position and a predicted movement direction of the movement means based on the measured data and the speed data;
determining (S220, S230) whether or not the movement means deviates from the travel road based on the map data and the predicted position and the predicted movement direction of the movement means; and
activating (S240) the deactivated GNSS device when determined to deviate

2. The GNSS device control method of claim 1, wherein the step of calculating of the predicted position and the predicted movement direction of the movement means based on the measured data and the speed data includes:
correcting the measured data by using an estimated value of a first error factor included in the inertial measurement device;
correcting the speed data by using an estimated value of a second error factor included in the speed sensor; and
calculating the predicted position and the predicted movement direction of the movement means based on the corrected measured data and the corrected speed data.

3. The GNSS device control method of claim 2, wherein the step of determining whether or not the movement means deviates from the travel road based on the map data and the predicted position and the predicted movement direction of the movement means includes:
temporarily determining whether or not the movement means deviates from the travel road based on the map data and the calculated estimated position and the calculated predicted movement direction of the movement means;
attempting to correct the estimated value of the first error factor and the estimated value of the second error factor when determined temporarily that the movement means deviates from the travel road;
determining that the movement means does not deviate from the travel road when correction of the estimated value of the first error factor and the estimated value of the second error factor is successful; and
determining that the movement means deviates from the travel road when correction of the estimated value of the first error factor and the estimated value of the second error factor fails.

4. The GNSS device control method of claim 3,
wherein attempting to correct the estimated value of the first error factor and the estimated value of the second error factor includes:
finding a corrected estimated value of the first error factor and a corrected estimated value of the second error factor that satisfy a predetermined high-level condition,
wherein the high-level condition is that each past data acquired by the inertial measurement device and the speed sensor satisfies a predetermined low-level condition after the GNSS device was most recently deactivated, and
wherein the low-level condition is that when a past predicted position and a past predicted movement direction of the movement means are recalculated based on the past data corrected by using the corrected estimated value of the first error factor and the corrected estimated value of the second error factor, it is determined, by the recalculated past predicted position and the recalculated past predicted movement direction of the movement means, that the movement means does not deviate from the travel road.

5. The GNSS device control method of claim 3, wherein the step of determining whether or not the movement means deviates from the travel road based on the map data and the predicted position and predicted movement direction of the movement means further includes:
recalculating a past predicted position and a past predicted movement direction of the movement means based on the past data corrected by using the corrected estimated value of the first error factor and the corrected estimated value of the second error factor, for each of all the past data acquired by the inertial measurement device and the speed sensor after the GNSS device is deactivated most recently when the correction of the estimated value of the first error factor and the estimated value of the second error factor is successful.

6. The GNSS device control method of claim 3, wherein the step of temporarily determining whether or not the movement means deviates from the travel road based on the map data and the predicted position and predicted movement direction of the movement means includes:
determining temporarily whether or not the movement means deviates from the travel road by using a predetermined function defined by a distance between the predicted position of the movement means and the travel road and by an angle between the predicted movement direction of the movement means and the movement direction of the travel roads.

7. The GNSS device control method of claim 2, wherein the first process further includes:
correcting the estimated value of the first error factor and the estimated value of the second error factor so as to minimize a difference between a final estimated position of the moving means finally calculated in the second process performed most recently and a position of the movement means first acquired from the GNSS device after the GNSS device is activated most recently, when the GNSS device is switched from an inactive state to an active state.

8. A computer program that is installed in a data processing device and stored in a recording medium, the program comprising instructions which, when the program is executed by the data processing device, cause the data processing device to carry out
the method according to any one of claims 1 to 7.

9. A GNSS device control system (100) comprising:
a processor; and
a memory that stores a computer program executed by the processor,
wherein the computer program causes the GNSS device control system to perform the method according to any one of claims 1 to 7 when executed by the processor.

## Patentansprüche

1. GNSS-Einrichtungssteuerverfahren zur Steuerung einer Einrichtung (210) eines globalen Navigationssatellitensystems (GNNS-Einrichtung), die in einem Bewegungsmittel eingebaut ist, wobei das Verfahren umfasst, dass:
durch ein GNSS-Einrichtungssteuersystem (100) Kartendaten erlangt werden;
durch das GNSS-Einrichtungssteuersystem periodisch ein vorbestimmter erster Prozess (P1) durchgeführt wird, während die GNSS-Einrichtung aktiv ist; und
durch das GNSS-Einrichtungssteuersystem periodisch ein vorbestimmter zweiter Prozess (P2) durchgeführt wird, während die GNSS-Einrichtung deaktiviert ist;
wobei der erste Prozess umfasst, dass:
eine Positionsinformation und eine Bewegungsrichtungsinformation des Bewegungsmittels von der aktivierten GNSS-Einrichtung erlangt werden (S100);
versucht wird (S110, S120), eine Straße, auf der das Bewegungsmittel fährt, basierend auf den Kartendaten und der Positionsinformation und Bewegungsrichtungsinformation des Bewegungsmittels zu ermitteln; und
die aktivierte GNSS-Einrichtung deaktiviert wird (S130), wenn eine Fahrstraße, auf der das Bewegungsmittel fährt, ermittelt wird, und
wobei der zweite Prozess umfasst, dass:
gemessene Daten von einer inertialen Messeinheit (IMU) (220) erlangt werden (S200);
Geschwindigkeitsdaten von einem Geschwindigkeitssensor (230) erlangt werden (S200);
eine vorhergesagte Position und eine vorhergesagte Bewegungsrichtung des Bewegungsmittels basierend auf den gemessenen Daten und den Geschwindigkeitsdaten berechnet werden (S210);
basierend auf den Kartendaten und der vorhergesagten Position und der vorhergesagten Bewegungsrichtung des Bewegungsmittels ermittelt wird (S220, S230), ob das Bewegungsmittel von der Fahrstraße abweicht oder nicht; und
die deaktivierte GNSS-Einrichtung aktiviert wird (S240), wenn eine Abweichung ermittelt wird.

2. GNSS-Einrichtungssteuerverfahren nach Anspruch 1, wobei der Schritt des Berechnens der vorhergesagten Position und der vorhergesagten Bewegungsrichtung des Bewegungsmittels basierend auf den gemessenen Daten und den Geschwindigkeitsdaten umfasst, dass:
die gemessenen Daten durch Verwenden eines geschätzten Werts eines ersten Fehlerfaktors, der in der inertialen Messeinrichtung umfasst ist, korrigiert werden;
die Geschwindigkeitsdaten durch Verwenden eines geschätzten Werts eines zweiten Fehlerfaktors, der in dem Geschwindigkeitssensor umfasst ist, korrigiert werden; und
die vorhergesagte Position und die vorhergesagte Bewegungsrichtung des Bewegungsmittels basierend auf den korrigierten gemessenen Daten und den korrigierten Geschwindigkeitsdaten berechnet werden.

3. GNSS-Einrichtungssteuerverfahren nach Anspruch 2, wobei der Schritt des Ermittelns basierend auf den Kartendaten und der vorhergesagten Position und der vorhergesagten Bewegungsrichtung des Bewegungsmittels, ob das Bewegungsmittel von der Fahrstraße abweicht oder nicht, umfasst, dass:
basierend auf den Kartendaten und der berechneten geschätzten Position und der berechneten vorhergesagten Bewegungsrichtung des Bewegungsmittels temporär ermittelt wird, ob das Bewegungsmittel von der Fahrstraße abweicht oder nicht;
versucht wird, den geschätzten Wert des ersten Fehlerfaktors und den geschätzten Wert des zweiten Fehlerfaktors zu korrigieren, wenn temporär ermittelt wird, dass das Bewegungsmittel von der Fahrstraße abweicht;
ermittelt wird, dass das Bewegungsmittel nicht von der Fahrstraße abweicht, wenn eine Korrektur des geschätzten Werts des ersten Fehlerfaktors und des geschätzten Werts des zweiten Fehlerfaktors erfolgreich ist; und
ermittelt wird, dass das Bewegungsmittel von der Fahrstraße abweicht, wenn eine Korrektur des geschätzten Werts des ersten Fehlerfaktors und des geschätzten Werts des zweiten Fehlerfaktors fehlschlägt.

4. GNSS-Einrichtungssteuerverfahren nach Anspruch 3, wobei der Versuch, den geschätzten Wert des ersten Fehlerfaktors und den geschätzten Wert des zweiten Fehlerfaktors zu korrigieren, umfasst, dass:
ein korrigierter geschätzter Wert des ersten Fehlerfaktors und ein korrigierter geschätzter Wert des zweiten Fehlerfaktors, die eine vorbestimmte Bedingung eines hohen Niveaus erfüllen, gefunden werden,
wobei die Bedingung eines hohen Niveaus umfasst, dass alle durch die inertiale Messeinrichtung und den Geschwindigkeitssensor erlangten früheren Daten eine vorbestimmte Bedingung eines niedrigen Niveaus erfüllen, nachdem die GNSS-Einrichtung jüngst deaktiviert wurde, und
wobei die Bedingung eines niedrigen Niveaus umfasst, dass, wenn eine frühere vorhergesagte Position und eine frühere vorhergesagte Bewegungsrichtung des Bewegungsmittels basierend auf den früheren durch Verwenden des korrigierten geschätzten Werts des ersten Fehlerfaktors und des korrigierten geschätzten Wert des zweiten Fehlerfaktors korrigierten Daten erneut berechnet werden, durch die erneut berechnete frühere vorhergesagte Position und die erneut berechnete frühere vorhergesagte Bewegungsrichtung des Bewegungsmittels ermittelt wird, dass das Bewegungsmittel nicht von der Fahrstraße abweicht.

5. GNSS-Einrichtungssteuerverfahren nach Anspruch 3, wobei der Schritt des Ermittelns basierend auf den Kartendaten und der vorhergesagten Position und vorhergesagten Bewegungsrichtung des Bewegungsmittels, ob das Bewegungsmittel von der Fahrstraße abweicht oder nicht, ferner umfasst, dass:
für alle früheren Daten, die durch die inertiale Messeinrichtung und den Geschwindigkeitssensor erlangt wurden, nachdem die GNSS-Einrichtung jüngst deaktiviert wurde, wenn die Korrektur des geschätzten Werts des ersten Fehlerfaktors und des geschätzten Werts des zweiten Fehlerfaktors erfolgreich ist, basierend auf den durch Verwenden des korrigierten geschätzten Werts des ersten Fehlerfaktors und des korrigierten geschätzten Werts des zweiten Fehlerfaktors korrigierten früheren Daten eine frühere vorhergesagte Position und eine frühere vorhergesagte Bewegungsrichtung des Bewegungsmittels erneut berechnet werden.

6. GNSS-Einrichtungssteuerverfahren nach Anspruch 3, wobei der Schritt des temporären Ermittelns basierend auf den Kartendaten und der vorhergesagten Position und vorhergesagten Bewegungsrichtung des Bewegungsmittels, ob das Bewegungsmittel von der Fahrstraße abweicht oder nicht, umfasst, dass:
durch Verwenden einer vorbestimmten Funktion, die durch eine Distanz zwischen der vorhergesagten Position des Bewegungsmittels und der Fahrstraße und durch einen Winkel zwischen der vorhergesagten Bewegungsrichtung des Bewegungsmittels und der Bewegungsrichtung der Fahrstraße definiert ist, temporär ermittelt wird, ob das Bewegungsmittel von der Fahrstraße abweicht oder nicht.

7. GNSS-Einrichtungssteuerverfahren nach Anspruch 2, wobei der erste Prozess ferner umfasst, dass:
der geschätzte Wert des ersten Fehlerfaktors und der geschätzte Wert des zweiten Fehlerfaktors korrigiert werden, um eine Differenz zwischen einer geschätzten Endposition des Bewegungsmittels, die schließlich in dem jüngst durchgeführten zweiten Prozess berechnet wird, und einer Position des Bewegungsmittels, die zuerst von der GNSS-Einrichtung erlangt wird, nachdem die GNSS-Einrichtung jüngst aktiviert wurde, wenn die GNSS-Einrichtung von einem inaktiven Zustand in einen aktiven Zustand umgeschaltet wird, zu minimieren.

8. Computerprogramm, das in einer Datenverarbeitungseinrichtung installiert und in einem Aufzeichnungsmedium gespeichert ist, wobei das Programm Anweisungen umfasst, die, wenn das Programm durch die Datenverarbeitungseinrichtung ausgeführt wird, bewirken, dass die Datenverarbeitungseinrichtung das Verfahren nach einem der Ansprüche 1 bis 7 ausführt.

9. GNSS-Einrichtungssteuersystem (100), umfassend:
einen Prozessor; und
einen Speicher, der ein durch den Prozessor ausgeführtes Computerprogramm speichert,
wobei das Computerprogramm bewirkt, dass das GNSS-Einrichtungssteuersystem das Verfahren nach einem der Ansprüche 1 bis 7 durchführt, wenn es durch den Prozessor ausgeführt wird.

## Revendications

1. Procédé de commande de dispositif GNSS pour commander un dispositif de système global de navigation par satellites (GNSS) (210) installé dans un moyen en mouvement, le procédé comprenant les étapes consistant à :
par un système de commande de dispositif GNSS (100), acquérir des données cartographiques ;
par le système de commande de dispositif GNSS, effectuer périodiquement un premier processus prédéterminé (P1) lorsque le dispositif GNSS est actif ; et
par le système de commande de dispositif GNSS, effectuer périodiquement un second processus prédéterminé (P2) lorsque le dispositif GNSS est désactivé,
dans lequel le premier processus inclut les opérations consistant à :
acquérir (S100) des informations de position et de direction de mouvement du moyen en mouvement par le dispositif GNSS activé ;
tenter (S110, S120) de déterminer une route sur laquelle le moyen en mouvement se déplace sur la base des données cartographiques et des informations de position et de direction de mouvement du moyen en mouvement ; et
désactiver (S130) le dispositif GNSS activé lorsqu'une route de déplacement sur laquelle le moyen en mouvement se déplace est déterminée, et
dans lequel le second processus inclut les opérations consistant à :
acquérir (S200) des données mesurées provenant d'une unité de mesure inertielle (IMU) (220) ;
acquérir (S200) des données de vitesse provenant d'un capteur de vitesse (230) ;
calculer (S210) une position prédite et une direction de mouvement prédite du moyen en mouvement sur la base des données mesurées et des données de vitesse ;
déterminer (S220, S230) si le moyen en mouvement s'écarte ou non de la route de déplacement sur la base des données cartographiques, de la position prédite et de la direction de mouvement prédite du moyen en mouvement ; et
activer (S240) le dispositif GNSS désactivé lorsqu'il est déterminé que le moyen en mouvement s'écarte de la route de déplacement.

2. Procédé de commande de dispositif GNSS selon la revendication 1, dans lequel l'étape consistant à calculer la position prédite et la direction de mouvement prédite du moyen en mouvement sur la base des données mesurées et des données de vitesse inclut les étapes consistant à :
corriger les données mesurées en utilisant une valeur estimée d'un premier facteur d'erreur inclus dans le dispositif de mesure inertielle ;
corriger les données de vitesse en utilisant une valeur estimée d'un second facteur d'erreur inclus dans le capteur de vitesse ; et
calculer la position prédite et la direction de mouvement prédite du moyen en mouvement sur la base des données mesurées corrigées et des données de vitesse corrigées.

3. Procédé de commande de dispositif GNSS selon la revendication 2, dans lequel l'étape consistant à déterminer si le moyen en mouvement s'écarte ou non de la route de déplacement sur la base des données cartographiques, de la position prédite et de la direction de mouvement prédite du moyen en mouvement inclut les étapes consistant à :
déterminer temporairement si le moyen en mouvement s'écarte ou non de la route de déplacement en fonction des données cartographiques, de la position estimée calculée et de la direction de mouvement prédite calculée du moyen en mouvement ;
tenter de corriger la valeur estimée du premier facteur d'erreur et la valeur estimée du second facteur d'erreur lorsqu'il est déterminé temporairement que le moyen en mouvement s'écarte de la route de déplacement ;
déterminer que le moyen en mouvement ne s'écarte pas de la route de déplacement lorsque la correction de la valeur estimée du premier facteur d'erreur et de la valeur estimée du second facteur d'erreur a été effectuée avec succès ; et
déterminer que le moyen en mouvement s'écarte de la route de déplacement lorsque la correction de la valeur estimée du premier facteur d'erreur et de la valeur estimée du second facteur d'erreur a échoué.

4. Procédé de commande de dispositif GNSS selon la revendication 3,
dans lequel l'étape consistant à tenter de corriger la valeur estimée du premier facteur d'erreur et la valeur estimée du second facteur d'erreur consiste à :
trouver une valeur estimée corrigée du premier facteur d'erreur et une valeur estimée corrigée du second facteur d'erreur qui satisfont une condition de haut niveau prédéterminée,
dans lequel la condition de haut niveau est que toutes les données antérieures acquises par le dispositif de mesure inertielle et le capteur de vitesse satisfont une condition de bas niveau prédéterminée après la désactivation la plus récente du dispositif GNSS, et
dans lequel la condition de bas niveau est que lorsqu'une position prédite antérieure et une direction de mouvement prédite antérieure du moyen en mouvement sont recalculées sur la base des données antérieures corrigées en utilisant la valeur estimée corrigée du premier facteur d'erreur et la valeur estimée corrigée du second facteur d'erreur, il est déterminé, par la position prédite antérieure recalculée et la direction de mouvement prédite antérieure recalculée du moyen en mouvement, que le moyen en mouvement ne s'écarte pas de la route de déplacement.

5. Procédé de commande de dispositif GNSS selon la revendication 3, dans lequel l'étape consistant à déterminer si le moyen en mouvement s'écarte ou non de la route de déplacement sur la base des données cartographiques, de la position prédite et de la direction de mouvement prédite du moyen en mouvement consiste en outre à :
recalculer une position prédite antérieure et une direction de mouvement prédite antérieure du moyen en mouvement sur la base des données antérieures corrigées en utilisant la valeur estimée corrigée du premier facteur d'erreur et la valeur estimée corrigée du second facteur d'erreur, pour chacune de toutes les données antérieures acquises par le dispositif de mesure inertielle et le capteur de vitesse après la désactivation la plus récente du dispositif GNSS lorsque la correction de la valeur estimée du premier facteur d'erreur et de la valeur estimée du second facteur d'erreur a été effectuée avec succès.

6. Procédé de commande de dispositif GNSS selon la revendication 3, dans lequel l'étape consistant à déterminer temporairement si le moyen en mouvement s'écarte ou non de la route de déplacement sur la base des données cartographiques, de la position prédite et de la direction de mouvement prédite du moyen en mouvement consiste à :
déterminer temporairement si le moyen en mouvement s'écarte ou non de la route de déplacement en utilisant une fonction prédéterminée définie par une distance entre la position prédite du moyen en mouvement et la route de déplacement et par un angle entre la direction de mouvement prédite du moyen en mouvement et la direction de mouvement de la route de déplacement.

7. Procédé de commande de dispositif GNSS selon la revendication 2, dans lequel le premier processus inclut en outre l'étape consistant à :
corriger la valeur estimée du premier facteur d'erreur et la valeur estimée du second facteur d'erreur de manière à minimiser une différence entre une position estimée finale du moyen en mouvement finalement calculée dans le second processus exécuté le plus récemment et une position du moyen en mouvement acquise pour la première fois à partir du dispositif GNSS après l'activation la plus récente du dispositif GNSS, lorsque le dispositif GNSS est passé d'un état inactif à un état actif.

8. Programme d'ordinateur installé dans un dispositif de traitement de données et stocké sur un support d'enregistrement, le programme comprenant des instructions qui, lorsque le programme est exécuté par le dispositif de traitement de données, amènent le dispositif de traitement de données à mettre en oeuvre le procédé selon l'une des revendications 1 à 7.

9. Système de commande de dispositif GNSS (100) comprenant :
un processeur ; et
une mémoire qui stocke un programme d'ordinateur exécuté par le processeur,
dans lequel le programme d'ordinateur amène le système de commande de dispositif GNSS à mettre en oeuvre le procédé selon l'une des revendications 1 à 7 lorsqu'il est exécuté par le processeur.
